# FASCICULE DE BREVET EUROPEEN

(11) **EP 2 005 639 B1**
(45) Date de publication et mention de la délivrance du brevet: **12.03.2014**
(21) Numéro de dépôt: 07727904.0
(22) Date de dépôt: 06.04.2007
(51) Int. Cl.: H04L 9/08

(54) **PROCÉDÉ HYBRIDE DE DISTRIBUTION DE CLÉS POUR LA DIFFUSION DE DONNÉES CHIFFRÉES**
HYBRIDES VERFAHREN ZUR SCHLÜSSELVERTEILUNG FÜR DAS AUSSENDEN VON VERSCHLÜSSELTEN DATEN
HYBRID KEY DISTRIBUTION METHOD FOR THE BROADCAST OF ENCRYPTED DATA

(30) Priorité: 07.04.2006 FR 0603104
(43) Date de publication de la demande: 24.12.2008
(73) Titulaire: Thales, 92200 Neuilly Sur Seine (FR)
(72) Inventeur: AGAGLIATE, Sandrine, 75001 Paris (FR); DUBOIS, Renaud, 75017 Paris (FR); GARRIDO, Eric, 95230 Soisy/Montmorency (FR)
(74) Mandataire: Lucas, Laurent Jacques
(86) Numéro de dépôt international: PCT/EP2007/053436
(87) Numéro de publication internationale: WO 2007/116043

(56) Documents cités:
- PARK ET AL: "On the mean number of encryptions for tree-based broadcast encryption schemes" JOURNAL OF DISCRETE ALGORITHMS, ELSEVIER, vol. 4, no. 2, 25 avril 2005 (2005-04-25), pages 215-238, XP005427470 ISSN: 1570-8667
- MIHALJEVIC M J ET AL: "Novel method for implementation of certain key management schemes to minimize secret storage" CONSUMER COMMUNICATIONS AND NETWORKING CONFERENCE, 2005. CCNC. 2005 SECOND IEEE LAS VEGAS, NV, USA 3-6 JAN. 2005, PISCATAWAY, NJ, USA,IEEE, 3 janvier 2005 (2005-01-03), pages 54-59, XP010787610 ISBN: 0-7803-8784-8

## Description

La présente invention concerne notamment un procédé pour diffuser des données à différents utilisateurs enregistrés de façon telle que seuls les utilisateurs autorisés puissent accéder aux informations. Les utilisateurs autorisés ou non peuvent changer à chaque session.

Le procédé concerne de manière générale un service de diffusion de données pour des systèmes à faible bande passante.

Il existe à l'heure actuelle différents schémas de diffusion dénommés BES (de l'anglais « Broadcast Encryption Scheme ») permettant de diffuser des données de manière fiable. Le principe d'un BES est le suivant. Chaque utilisateur u possède un ensemble spécifique I(u) contenant plusieurs clés de chiffrement dénommées KEKs (de l'anglais « Key Encryption Keys »). A chaque session, les données sont chiffrées avec une « clé de session», et la clé de session (et éventuellement de nouvelles clés KEKs) est chiffrée avec des clés KEKs telles que, chaque utilisateur autorisé connaît au moins une des clés utilisées et les utilisateurs non autorisés ou « déniés » ne connaissent aucune des clés utilisées.

Le choix de la méthode de diffusion BES détermine les clés KEKs, leur structure, les possibilités de renouvellement et le choix des clés KEKs utilisées pour le chiffrement pour une session donnée.

Trouver un chiffrement réellement efficace lorsque la donnée est transmise par un média à très faible largeur de bande et lorsqu'il y a plusieurs « dénis » possibles est un problème. Le choix du schéma de diffusion BES peut être critique, par exemple, si la donnée est émise par des satellites.

L'art antérieur divulgue plusieurs schémas de chiffrement pour la diffusion des données, en particulier deux grands types de schémas, les schémas « stateless » et les schémas « stateful » décrits ci-après.

Dans un schéma « stateless », toutes les clés de chiffrement KEKs sont distribuées lors de l'initialisation du système. Les clés KEKs sont ensuite statiques pendant toute la durée de vie du système et aucune autre clé n'est ajoutée. Seule la clé de session peut être changée. Cela signifie que, lorsqu'un utilisateur perd la connexion ou que pour d'autres raisons, il manque des paquets de données utilisant des clés KEKs, il ne pourra déchiffrer le contenu utile du message (ne connaissant pas la clé de session en cours), mais, dès qu'il aura accès aux prochains paquets utilisant des clés KEKs, il pourra récupérer les futures clés de la session sans effort supplémentaire.

Dans un schéma « stateful », les clés de chiffrement KEKs peuvent être mises à jour ou additionnées grâce à des messages de gestion des clés. Cela signifie que, si l'utilisateur manque les paquets de gestion des clés, il peut être impossible pour lui de déchiffrer les clés de session suivantes. Une perte de paquets de données par les utilisateurs étant possible, un schéma « stateful » doit être complété avec un mécanisme de récupération des paquets. En général, un schéma « stateful » peut toujours être transformé en un schéma « stateless » en incluant tous les messages précédents dans chaque nouveau message.

| | Caractéristique : Chaque session est-elle indépendante de l'état de la session précédente ? | Avantage principal | Principaux Inconvénients |
|---|---|---|---|
| Schéma « stateless » | OUI | Un utilisateur peut être déconnecté d'une station sans perdre l'information utile pour la prochaine session | La taille du message augmente potentiellement à chaque session |
| | Chaque session contient toutes les informations du toutes les informations du passé (utilisateurs déniés, nouveaux utilisateurs) | | |
| Schéma « Stateful » | NON. | La taille du message n'augmente pas a priori d'une session à la session suivante | Si un utilisateur est déconnecté pendant une session il peut perdre l'information utile pour les sessions futures |
| | Chaque session contient seulement l'information utile qui est nouvelle par rapport au passé | | |

Les articles les plus récents relatifs au schéma de diffusion BES utilisent deux types principaux de structure de clés de chiffrement KEKs.

### KEKs structure N° 1:

La première structure de clé de chiffrement est un simple arbre hiérarchique. Les utilisateurs sont représentés par des feuilles d'un arbre T. Cet arbre n'est pas nécessairement binaire ni équilibré.

A chaque noeud vᵢ de l'arbre est associée une clé kᵢ. Les feuilles sont considérées comme des noeuds particuliers. Les clés kᵢ sont des clés KEKs utilisées dans un BES. Lors de l'initialisation, chaque utilisateur u (c'est-à-dire chaque feuille u) reçoit le jeu de toutes les clés kᵢ correspondant aux noeuds vᵢ appartenant au plus court chemin entre la racine de T et la feuille u. Ainsi la clé **kᵢ** est distribuée à chaque feuille du sous-arbre **Sᵢ** dont la racine est le noeud vᵢ et seulement à ces feuilles. Toute donnée chiffrée avec la clé kᵢ est destinée aux feuilles de Sᵢ et seulement à ces feuilles. On note k₀ la clé racine (c'est-à-dire la clé associée à la racine v₀ de l'arbre T) et {kᵢ } l'ensemble de toutes les clés kᵢ.

### KEKs structure N° 2:

La seconde structure de clé de chiffrement KEKs est aussi basée sur un arbre hiérarchique T tel que, chaque utilisateur est représenté par une feuille d'arbre. L'arbre est binaire et une clé **k_{i,j}** est associée à une différence de sous ensembles
**S_{i,j}** = Sᵢ - Sⱼ de façon telle que, le sous arbre Sᵢ contient le sous-arbre Sⱼ.
Chaque clé k_{i,j} est distribuée pour chaque feuille appartenant au sous-ensemble S_{i,j}, (c'est-à-dire appartenant à Sᵢ mais pas à Sⱼ) et cette clé est utilisée pour chiffrer toute donnée destinée à tous les utilisateurs appartenant à S_{i,j} et seulement à eux.
Une clé **k**_{**0**,--} est associée à l'ensemble de l'arbre T et donnée à chacun des utilisateurs. On note {k_{i,j}} l'ensemble de toutes les clés k_{i,j} incluant la clé k_{0,--}.

De nombreuses méthodes de diffusion BES, « stateful » ou « stateless », utilisent la structure KEKs N °1, comme, par exemple, la méthode CS décrite dans la référence [3] ou LKH décrite dans l'une des références [6], [5], [4-RFC-2627]. Plusieurs méthodes stateless BES efficaces utilisent la structure KEKs N°2, comme la « méthode de différence de sous-ensembles » SD donnée dans [3] ou des schémas dérivés de SD.

L'état de l'art montre que la structure de clé N °1 est adaptée au schéma « stateful BESs » alors que la structure N°2 est mieux adaptée au schéma « stateless BESs ».

Les auteurs dans la référence [1] proposent deux schémas hybrides qui combinent un algorithme « stateful » et un algorithme « stateless», ayant la même structure de clé KEKs.

### Schéma hybride basé sur les schémas précédents

Un schéma hybride simple mélange la méthode « stateless » CS décrite, par exemple, dans la référence [3] et la méthode « stateful » LKH (voir les références [6], [5], [RFC-2627]). Si l'on utilise seulement la méthode CS pour diffuser un message et si le nombre d'utilisateurs « déniés » devient très important, alors la taille de la session de diffusion devient très importante. L'idée principale du schéma hybride décrit dans [1] est la suivante : généralement, on utilise la méthode stateless CS, mais lorsque le nombre d'utilisateurs déniés est supérieur à un seuil fixé, alors on utilise la méthode stateful LKH pour renouveler les clés connues par les utilisateurs autorisés et les utilisateurs déniés. Ainsi l'ensemble des utilisateurs déniés est remis à jour et l'on utilise à nouveau la méthode CS. La largeur de bande utilisée est ainsi améliorée par rapport à celle obtenue lorsque l'on utilise la seule méthode CS.

Les schémas hybrides divulgués dans l'art antérieur ne proposent toutefois pas de solution permettant de mélanger des schémas présentant chacun des structures de clés de chiffrement KEKs différentes.

L'idée de la présente invention repose sur un nouveau schéma hybride mélangeant une procédure « stateless » A1 et une procédure « stateful » A2 utilisant différentes structures de clés.

L'invention concerne notamment un procédé de diffusion de données dans un système utilisant un schéma stateless BES (A1) utilisant un arbre binaire T avec une structure de clé KEKs **N°2,** i.e. telle qu'une clé **k_{i,j}** est associée à chaque différence de sous-ensembles **S_{i,j}** = **Sᵢ - Sⱼ** où **Sᵢ** et **Sⱼ** sont deux sous-arbres tels que **Sᵢ** contient **S_{j,,}** et une clé racine k_{0,--} associée à l'ensemble de l'arbre T et un schéma « stateful » BES (A2) utilisant le même arbre binaire T avec une structure de clé KEKs **N°1,** i.e. telle qu'une clé **kᵢ** soit associée à chaque sous arbre Sᵢ caractérisé en ce que l'on utilise le schéma (A1) pour la session courante de diffusion et mettre à jour les clés connues par les utilisateurs déniés avec un schéma « stateful » (A2) de temps à autre, le jeu de clés permettant la diffusion des messages de la session courante avec le schéma (A1) étant un autre jeu {Lᵢⱼ} où une clé Lᵢⱼ est déterminée à partir des clés {kᵢⱼ} et {kᵢ}.

Les clés statiques **k_{i,j}** and **k_{0,--}** définies par les procédures "stateless" (A1) ayant une longueur en bits notée Nₛ, les clés dynamiques **kᵢ** définies par la procédure "stateful (A2) ont une longueur en bits notée N_{d}, le procédé utilise une fonction F avec des entrées dans {0,1}^{NS} x {0,1}^{Nd} et des sorties dans {0,1}^{Ns}, la fonction F est telle que :
- il est facile de calculer z=F(x,y) à partir de tout (x,y) appartenant à {0,1}^{Ns} x {0,1}^{Nd}
- pour tout triplet (x,y,z) tel que z=F(x,y), il est impossible de trouver z si l'on ne possède aucune information sur y, même si x est connu.
et il comporte au moins les étapes suivantes :
a) pour chaque index i d'un noeud vᵢ de l'arbre, et pour chaque index j d'un noeud vⱼ appartenant au sous-arbre Sᵢ, on définit les clés variables suivantes :
   - **L¡_{,j}** =F(**k_{i,j}** , **kᵢ**) calculé à partir de la clé statique k_{i,j} et la clé dynamique kᵢ ,
   - **L_{0,--}** =F(**k**_{**0**,--} , **k**₀) calculé à partir de la clé statique k_{0,--} et de la clé dynamique k₀.
b) chaque session t, on note Mₜ les données à diffuser vers les utilisateurs autorisés, et on utilise (A1) pour diffuser Mₜ avec les "clés variables" on envoie : A1[Mₜ, {L_{i,j}}],
c) toutes les T sessions, où T est un paramètre, on utilise (A2) pour renouveler les clés dynamiques partagées par les utilisateurs autorisés et révoqués, et on envoie une information I(D) donnant la date D de la mise en oeuvre opérationnelle du jeu de clés renouvelées, i.e, envoyer A2[M, {kᵢ}, {k'ᵢ}] et I(D),
d) à la date D, le nouveau jeu de clés {k'ᵢ}, et en conséquence l'ensemble des clés {L_{i,j}} est remplacé par le nouveau jeu {L'_{i,j}} tel que L'_{i,j} = F (kᵢⱼ, k'ᵢ).

Le procédé est utilisé par exemple pour la diffusion de données comportant un service de radio-navigation par satellite protégé chaque jour t par une clé de trafic K_{T} (t), chaque jour t, un service fournit aux utilisateurs autorisés un message Mₜ contenant une ou plusieurs clés de trafic futures donnant un accès potentiel au service S pour les jours futurs, caractérisé en ce que l'on diffuse le message Mₜ en exécutant les étapes décrites ci-dessus.

Le procédé selon l'invention présente notamment les avantages suivants :
pouvoir choisir les méthodes (A1) et (A2) parmi les plus performantes, c'est-à-dire de choisir une méthode stateless A1 ayant une structure de clés N°2 et
une méthode stateful A2 ayant une structure de clés N°1, et combiner ces deux méthodes.

Le schéma stateless (A1) est utilisé pour la session courante de diffusion. Ainsi, entre deux messages A2, un utilisateur peut rater plusieurs messages A1 sans échouer dans le déchiffrement du prochain message A1.

Le schéma stateful (A2) est utile pour deux raisons : Il renouvelle les clés connues par les utilisateurs révoqués (pour des raisons de sécurité) et il permet de "réinitialiser" l'ensemble des utilisateurs révoqués (raison d'optimisation de largeur de bande).

D'autres caractéristiques et avantages de la présente invention apparaîtront mieux à la lecture de la description d'un exemple donné à titre illustratif et nullement limitatif annexé des figures suivantes qui représentent :

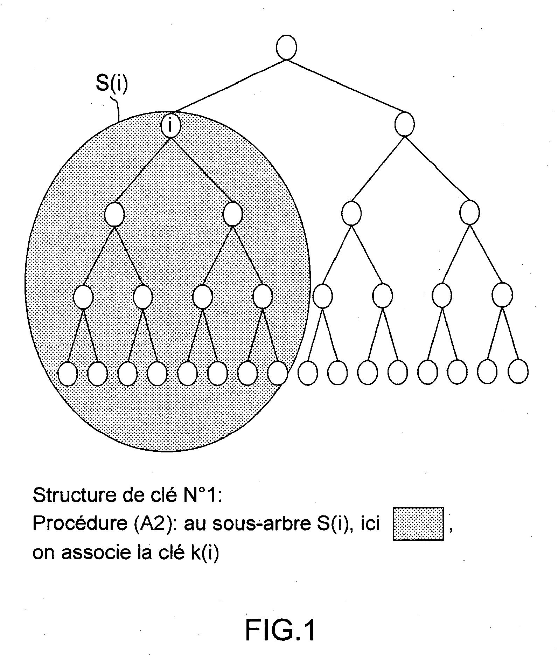

- la figure 1 un arbre binaire pour A1 avec les clés associées,

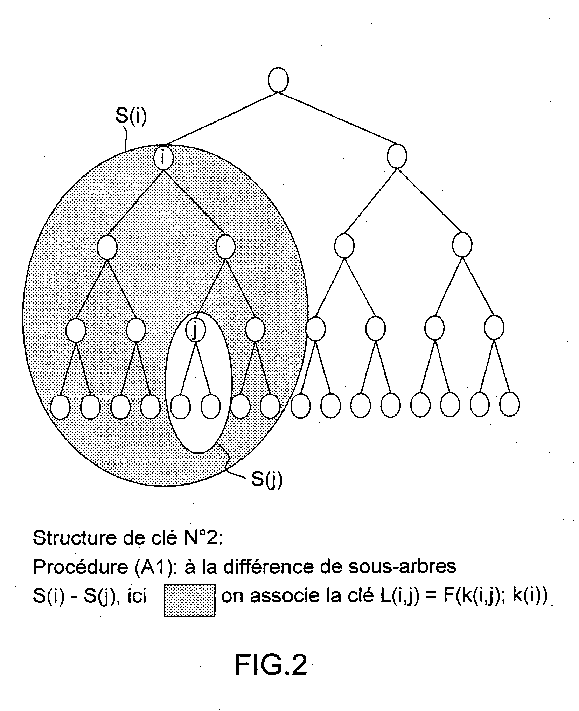

- la figure 2 un arbre binaire pour A2 avec les clés associées.

En résumé le procédé selon l'invention comporte, par exemple, les étapes suivantes :
1) choisir deux schémas A1 et A2 définis ci-après,
2) calculer des clés de chiffrement « variables » à partir des clés de chiffrement « statiques » et de clés de chiffrement « dynamiques »,
3) utiliser des schémas A1 et A2 avec les clés de chiffrement « statiques », « dynamiques » et « variables » comme il est exposé ci-après.
L'invention permet de mixer deux schémas, l'un stateless l'autre stateful, ayant des structures de clés différentes.

### Description détaillée d'un mode de réalisation

De manière à illustrer le procédé selon l'invention, l'exemple donné se place dans le cas suivant :
1 - on considère un schéma stateless BES (A1) utilisant un arbre binaire T avec une structure de clé KEKs **N°2,** i.e. telle qu'une clé **k_{i,j}** est associée à chaque différence de sous-ensembles **S_{i,j}** , et une clé racine k_{0,--} associée à l'ensemble de l'arbre T.
   Comme tout schéma « stateless », « l'utilisation normale » de (A1) pour une session donnée consiste à envoyer une donnée M formatée dans le message M', contenant : la donnée M chiffrée par une clé de session et la clé de session chiffrée par plusieurs clés KEKs appartenant à l'ensemble {k_{i,j}} tel que seuls les utilisateurs qui sont autorisés pour la session puissent déchiffer la clé de session (permettant de déchiffrer la donnée M).
   En particulier, s'il n'y a pas de dénis, la clé de session est chiffrée avec la clé de la racine k_{0,-}.
   On note M'=A1 [M, {k_{i,j}}].
2 - on considère un schéma « stateful » BES (A2) utilisant le même arbre binaire T avec une structure de clé KEKs **N°1,** i.e. telle qu'une clé **kᵢ** soit associée à chaque sous arbre **Sᵢ**.
Comme tout schéma « stateful », « l'utilisation normale » de (A2) pour une session donnée consiste à envoyer une donnée M formatée dans le message M', contenant : plusieurs nouvelles clés KEKs k'ᵢ (incluant une nouvelle clé racine k'₀) chiffrée avec des clés courantes KEKs, et la donnée M chiffrée par la nouvelle clé de la racine k'₀ (ayant le rôle de clé de session).
Le nouvel ensemble {k'ᵢ} renouvelle les clés KEKs partagée par les utilisateurs déniés et les utilisateurs autorisés. Ce sera l'ensemble des clés KEKs courantes pour la prochaine session.

Nous notons M'=A2[M, {kᵢ}, {k'ᵢ}].

### Nouveau schéma hybride selon l'invention :

L'idée de ce schéma hybride est d'utiliser un schéma stateless (A1) efficace pour la session courante de diffusion, et de mettre à jour les clés connues par les utilisateurs révoqués avec un schéma efficace « stateful » (A2) de temps à autre, par exemple lorsque le nombre d'utilisateurs révoqués devient important.

Les clés **k_{i,j} and k_{0,--}** définies par les procédures "stateless" (A1) sont appelées "clés *statiques".* Leur longueur en bits est notée Nₛ.

Les clés **kᵢ** définies par la procédure "stateful (A2) sont appelées *"clés dynamiques".* Leur longueur en bits est notée N_{d}.

On note **F** une fonction avec des entrées dans {0,1}^{Ns} x {0,1}^{Nd} et des sorties dans {0,1}^{Ns}. La fonction F est telle que :
- il est facile de calculer z=F(x,y) à partir de tout (x,y) appartenant à {0,1}^{Ns} x {0,1}^{Nd}
- pour tout triplet (x,y,z) tel que z=F(x,y), il est impossible de trouver z si l'on ne possède aucune information sur y, même si x est connu.
Par exemple, si Nₛ=N_{d} alors F peut être la fonction XOR, car si z = x XOR y alors la connaissance de x ne donne pas d'information sur z si y est inconnu.
Une condition plus forte à vérifier peut être que F est une fonction à sens unique « one-way function », i.e. pour tout z donné, il est pratiquement impossible par calcul de trouver un couple (x,y) tel que z=F(x,y).

Pour chaque index i d'un noeud vᵢ de l'arbre, et pour chaque index j d'un noeud vⱼ appartenant au sous-arbre Sᵢ, on définit les clés suivantes :
- **L_{i,j}** =F(**k_{i,j}** , **kᵢ**) calculé à partir de la clé statique k_{i,j} et la clé dynamique kᵢ.
- **L_{0,--}** =F(**k**_{**0**,--} , **k₀)** calculé à partir de la clé statique k_{0,--} et de la clé dynamique k₀.

Ces nouvelles clés L_{i,j} et L_{0,--} sont appelées *"clés variables".* Ces clés ont la même longueur que les clés statiques et sont indexées de manière identique.

Ces clés variables remplaceront les clés KEKs k_{i,j} pour le schéma (A1) dans le schéma hybride selon l'invention.

Chaque session t, on note Mₜ les données à diffuser vers les utilisateurs autorisés.

Le schéma hybride mélangeant (A1) et (A2) est le suivant :
- Chaque session t, on utilise (A1) pour diffuser Mₜ avec les "clés variables" comme KEKs, c'est-à-dire on envoie : A1[Mₜ, {L_{i,j}}].
- Toutes les T sessions, où T est un paramètre (fixé ou pouvant varier), on utilise (A2) pour renouveler les clés dynamiques partagées par les utilisateurs autorisés et révoqués, et on envoie une information I(D) donnant la date D de la mise en oeuvre opérationnelle du jeu de clés renouvelées, i.e, envoyer A2[M, {kᵢ}, {k'ᵢ}] et I(D)

Contrairement à l'utilisation « normale » de A1, on utilise ici A1 avec les clés variables {L_{i,j}} au lieu des clés statiques {k_{i,j}}, de sorte à ce que A2 permettent un renouvellement des clés utilisées par A1.

A la date D, l'ensemble de clés dynamiques {kᵢ} est remplacé par le nouveau jeu {k'ᵢ}. Les clés variables utilisées pour (A1) dépendent des clés dynamiques et des clés statiques. Ainsi, à la date D, l'ensemble des clés variables {L_{i,j}} est remplacé par le nouveau jeu et utilisé pour (A1).

Le nouveau schéma hybride selon l'invention repose sur l'idée suivante : utiliser un schéma efficace stateless (A1) pour la session courante de diffusion et mettre à jour les clés connues par les utilisateurs déniés avec un schéma stateful efficace (A2) de temps à autre (toutes les T sessions), par exemple lorsque le nombre d'utilisateurs déniés augmente de manière trop importante.

Remarques sur le paramètre T :
- *Remarque 1 :* si le temps entre des sessions des messages A1 est fixé (une session par jour par exemple), et si le temps entre deux messages A2 est fixé (T jours par exemple) et connus par les utilisateurs, alors l'information I(D) est implicite et il n'est pas nécessaire de la transmettre,
- *Remarque 2 :* Le nombre T de session entre deux messages A2 peut évoluer avec le nombre de personnes révoquées. Par exemple, un message A2 est transmis lorsque le nombre d'utilisateurs révoqués atteint un seuil.

### Exemple d'utilisation de schéma hybride :

Le schéma hybride peut être utilisé par un service OTAR (Over The Air Rekeying) avec contrôle d'accès.

Par exemple, si l'on fait l'hypothèse qu'un service de radio-navigation par satellite est protégé chaque jour t par une clé de trafic K_{T} (t). Chaque jour t, un service OTAR fournit aux utilisateurs autorisés un message Mₜ contenant une ou plusieurs clés de trafic futures donnant un accès potentiel au service S pour les jours futurs.

Les satellites ont une très faible largeur de bande. Les utilisateurs doivent donc s'organiser en groupes d'utilisateurs, et les groupes sont organisés comme des feuilles d'un arbre de hiérarchie binaire.

Le message Mₜ peut être diffusé en utilisant le schéma hybride utilisant l'arbre T, par exemple avec la méthode SD décrite par exemple dans la référence [3] pour (A1) et la méthode OFT exposée dans la référence [2] pour (A2).

### Références

[1] Shaoquan Jiang and Guang Gong. Hybrid Broadcast Encryption and Security Analysis. Cryptology ePrint Archive, Report 2003/241, 2003. http://eprint.iacr.org/.
[2] David A. McGrew and Alan T. Sherman. Key Establishment in Large Dynamic Groups Using One-Way Function Trees. Manuscript, 1998.
[3] Dalit Naor, Moni Naor, and Jeff Lotspiech. Revocation and tracing schemes for stateless receivers. Lecture Notes in Computer Science, 2139:41-62, 2001.
[4] : "Key Management for Multicast: Issues and Architectures", RFC 2627, 1999.
[5] Debby M. Wallner, Eric J. Harder, and Ryan C. Agee. Key Management for Multicast: Issues and Architectures. Internet Request for Comment RFC 2627, Internet Engineering Task Force, 1999.
[6] Chung Kei Wong, Mohamed Gouda, and Simon S. Lam. Secure group communications using key graphs. In Proceedings of the ACM SIGCOMM '98 conference on Applications, technologies, architectures, and protocols for computer communication, pages 68-79. ACM Press, 1998.

## Revendications

1. Procédé de diffusion de données dans un système utilisant un schéma stateless A1 utilisant un arbre binaire T avec une structure de clé de chiffrement KEKs **N°2,** i.e. telle qu'une clé **k_{i,j}** est associée à chaque différence de sous-ensembles **S_{i,j}** = **Sᵢ - Sⱼ** où Sᵢ et **Sⱼ** sont deux sous-arbres tels que **Sᵢ** contient **Sⱼ,** et une clé racine k_{0,--} associée à l'ensemble de l'arbre T et un schéma « stateful » A2 utilisant le même arbre binaire T avec une structure de clé de chiffrement KEKs **N°1,** i.e. telle qu'une clé **kᵢ** soit associée à chaque sous arbre **Sᵢ, caractérisé en ce que** l'on utilise le schéma A1 pour la session courante de diffusion et on met à jour les clés connues par les utilisateurs déniés avec un schéma « stateful » A2 de temps à autre, le jeu de clés permettant la diffusion des messages de la session courante avec le schéma A1 étant un autre jeu {Lᵢⱼ} où une clé Lᵢⱼ est déterminée à partir des clés **kᵢⱼ** et **kᵢ**.

2. Procédé de diffusion de données selon la revendication 1, les clés de chiffrement statiques **k_{i,j} and k_{0,--}** définies par les procédures "stateless" A1 ayant une longueur en bits notée Nₛ , les clés de chiffrement dynamiques **kᵢ** définies par la procédure "stateful A2 ont une longueur en bits notée N_{d}, le procédé utilise une fonction **F** avec des entrées dans {0,1}^{Ns} x {0,1}^{Nd} et des sorties dans {0,1}^{Ns}, la fonction F est telle que :
• il est facile de calculer z=F(x,y) à partir de tout (x,y) appartenant à {0,1}^{Ns} x {0,1}^{Nd}
• pour tout triplet (x,y,z) tel que z=F(x,y), il est impossible de trouver z si l'on ne possède aucune information sur y, même si x est connu,
**caractérisé en ce qu'**il comporte au moins les étapes suivantes :
a) pour chaque index i d'un noeud vᵢ de l'arbre, et pour chaque index j d'un noeud vⱼ appartenant au sous-arbre Sᵢ, on définit les clés de chiffrement variables suivantes :
• **L_{i,j}** =F(**k_{i,j}**, **kᵢ**) calculé à partir de la clé de chiffrement statique k_{i,j} et la clé de chiffrement dynamique kᵢ.
• **L_{0,--}** =F(**k**_{**0**,--} , **k**₀) calculé à partir de la clé statique k_{0,--} et de la clé dynamique k₀.
b) chaque session t, on note Mₜ les données à diffuser vers les utilisateurs autorisés, et on utilise A1 pour diffuser Mₜ avec les "clés de chiffrement variables" on envoie : A1 [Mₜ, {L_{i,j}}],
c) toutes les T sessions, où T est un paramètre, on utilise A2 pour renouveler les clés dynamiques partagées par les utilisateurs autorisés et révoqués, et on envoie une information I(D) donnant la date D de la mise en oeuvre opérationnelle du jeu de clés de chiffrement renouvelées, i.e, envoyer A2[M, {kᵢ}, {k'ᵢ}] et I(D),
d) à la date D, le nouveau jeu de clés {k'ᵢ}, et en conséquence l'ensemble des clés {L_{i,j}} est remplacé par le nouveau jeu {L'_{i,j}} tel que L'_{i,j} = F (kᵢⱼ, k'ᵢ).

3. Procédé de diffusion de données comportant un service de radio-navigation par satellite protégé chaque jour t par une clé de trafic K_{T} (t), chaque jour t, un service fournit aux utilisateurs autorisés un message Mₜ contenant une ou plusieurs clés de trafic futures donnant un accès potentiel au service S pour les jours futurs, **caractérisé en ce que** l'on diffuse le message Mₜ en utilisant le procédé selon l'une des revendications 1 ou 2.

## Patentansprüche

1. Verfahren zum Verteilen von Daten in einem System mit einem zustandslosen Schema A1 unter Verwendung eines binären Baums T mit einer Kodierungsschlüsselstruktur KEK Nr. 2, d.h. so dass ein Schlüssel k_{i,j} mit jeder Differenz von Teilmengen S_{i,j} = Sᵢ - Sⱼ assoziiert ist, wobei Sᵢ und Sⱼ zwei Teilbäume sind, so dass Sᵢ Sⱼ enthält, und ein Root-Schlüssel k_{0,--}, der mit dem Satz des Baums T assoziiert ist, und einem "zustandsvollen" Schema A2 unter Verwendung desselben binären Baums T mit einer Kodierungsschlüsselstruktur KEK Nr. 1, d.h. so dass ein Schlüssel kᵢ mit jedem Teilbaum Sᵢ assoziiert ist, **dadurch gekennzeichnet, dass** das Schema A1 für die laufende Verteilungssitzung benutzt wird und die von den abgelehnten Benutzern bekannten Schlüssel von Zeit zu Zeit mit einem "zustandsvollen" Schema A2 aktualisiert werden, wobei die Schlüsselgruppe das Verteilen von Nachrichten der laufenden Sitzung zulässt, wobei das Schema A1 eine andere Gruppe {L_{i,j}} ist, wobei ein Schlüssel L_{i,j} auf der Basis der Schlüssel k_{i,j} und kᵢ ermittelt wird.

2. Datenverteilungsverfahren nach Anspruch 1, wobei die statischen Kodierungsschlüssel k_{i,j} und k₀,- durch die "zustandslosen" Prozeduren A1 mit einer mit Nₛ markierten Bitlänge definiert werden, wobei die dynamischen Kodierungsschlüssel kᵢ durch die "zustandsvolle" Prozedur A2 mit einer mit N_{d} markierten Bitlänge definiert werden, wobei das Verfahren eine Funktion F mit Eingängen in {0,1}^{Ns} x {0,1}^{Nd} und Ausgängen in {0,1}^{Ns} benutzt, wobei die Funktion F derart ist, dass:
• z=F(x, y) leicht mit jedem (x, y) berechnet werden kann, das zu {0,1}^{Ns} x {0,1}^{Nd} gehört;
• es für jedes Triplett (x, y, z) wie z=F(x, y) unmöglich ist, z zu finden, wenn über y keine Informationen vorliegen, selbst dann, wenn x bekannt ist,
**dadurch gekennzeichnet, dass** es wenigstens die folgenden Schritte beinhaltet:
a) Definieren, für jeden Index i eines Knotens vᵢ des Baums und für jeden Index j eines Knotens vⱼ, der zum Teilbaum Sᵢ gehört, der folgenden variablen Kodierungsschlüssel:
• L_{i,j} = F(k_{i,j}, kᵢ), berechnet auf der Basis des statischen Kodierungsschlüssels k_{i,j} und des dynamischen Kodierungsschlüssels kᵢ;
• L_{0,--} = F(k₀₋₋, k₀), berechnet auf der Basis des statischen Schlüssels k₀₋ und des dynamischen Schlüssels k₀;
b) Markieren, für jede Sitzung t, der zu den berechtigten Benutzern zu verteilenden Daten als Mₜ und Benutzen von A1 zum Verteilen von Mₜ mit den "variablen Kodierungsschlüsseln" und Senden von A1[Mₜ, {L_{i,j}}];
c) Benutzen von A2, für alle Sitzungen T, wobei T ein Parameter ist, zum Erneuern der von den berechtigten und widerrufenen Benutzern gemeinsam benutzten dynamischen Schlüssel und Senden von Informationen I(D), die die Zeit D der Betriebsimplementation des Satzes von erneuten Kodierungsschlüsseln bereitstellen, d.h. Senden von A2 [M, {kᵢ}, {k'ᵢ}] and I(D);
d) Ersetzen, zum Zeitpunkt D, der neuen Schlüsselgruppe {k'ᵢ} und folglich der Schlüsselgruppe {L_{i,j}} durch die neue Gruppe {L'_{i,j}} wie L'_{i,j}=F(k_{i,j}, k'ᵢ).

3. Datenverteilungsverfahren, das einen Satellitenfunknavigationsdienst beinhaltet, der an jedem Tag t durch einen Verkehrsschlüssel K_{T}(t) geschützt wird, wobei an jedem Tag t ein Dienst die berechtigten Benutzer mit einer Nachricht Mₜ versorgt, die einen oder mehrere zukünftige Verkehrsschlüssel enthält, die potentiell Zugang zum Dienst S für die folgenden Tage gibt, **dadurch gekennzeichnet, dass** die Nachricht Mₜ mit dem Verfahren nach Anspruch 1 oder 2 verteilt wird.

## Claims

1. A method for broadcasting data in a system using a stateless scheme A1 using a binary tree T with a No2 KEKs encryption key structure, i.e. such that a key k_{i,j} is associated with each difference of sub-sets S_{i,j} = Sᵢ - Sⱼ, where Sᵢ and Sⱼ are two sub-trees such that Sᵢ contains Sⱼ, and a root key k_{0,--} associated with the set of the tree T and a "stateful" scheme A2 using the same binary tree T with a No1 KEKs encryption key structure, i.e. such that a key kᵢ is associated with each sub-tree Sᵢ, **characterised in that** the scheme A1 is used for the current broadcasting session and the keys known by denied users are updated with a "stateful" scheme A2 from time to time, with the group of keys allowing the broadcasting of the messages of the current session with the scheme A1 being another group {Lᵢⱼ}, wherein a key Lᵢⱼ is determined on the basis of the keys k_{i,j} and kᵢ.

2. The data broadcasting method according to claim 1, with the static encryption keys k_{i,j} and k_{0,-} defined by the "stateless" procedures A1 having a bit length marked Nₛ, the dynamic encryption keys kᵢ defined by the "stateful" procedure A2 having a bit length marked N_{d}, the method uses a function F with inputs in {0,1}^{Ns} x {0,1}^{Nd} and outputs in {0,1}^{Ns}, with the function F being such that:
• it is easy to calculate z=F(x, y) on the basis of any (x, y) belonging to {0,1}^{Ns} x {0,1}^{Nd};
• for any triplet (x, y, z) such that z=F(x, y) it is impossible to find z if no information on y is known, even if x is known,
**characterised in that** it comprises at least the following steps:
a) defining, for each index i of a node vᵢ of the tree and for each index j of a node vⱼ belonging to the sub-tree Sᵢ, the following variable encryption keys:
• Lᵢⱼ = F(k_{i,j}, kᵢ) calculated on the basis of the static encryption key k_{i,j} and the dynamic encryption key kᵢ;
• L_{0,--} = F(k₀₋₋, k₀) calculated on the basis of the static key k₀₋₋ and the dynamic key k₀;
b) marking as Mₜ, for each session t, the data to be broadcast to the authorised users and using A1 to broadcast Mₜ with the "variable encryption keys" and sending A1[Mₜ, {Lᵢⱼ}];
c) using A2, for all of the sessions T, where T is a parameter, for renewing the dynamic keys shared by the authorised and revoked users, and sending information I(D) providing the time D of the operational implementation of the group of renewed encryption keys, i.e. sending A2 [M, {kᵢ}, {k'ᵢ}] and I(D);
d) replacing, at the time D, the new group of keys {k'ᵢ}, and consequently the set of keys {Lᵢⱼ}, with the new group {L'ᵢⱼ}, such that L'ᵢⱼ=F(kᵢⱼ, k'ᵢ).

3. The data broadcasting method comprising a satellite radio-navigation service that is protected each day t by a traffic key K_{T}(t), each day t a service provides the authorised users with a message Mₜ containing one or more future traffic keys giving potential access to the service S for the coming days, **characterised in that** the message Mₜ is broadcast using the method according to claim 1 or 2.
